# EUROPÄISCHE PATENTSCHRIFT

(11) **EP 0 976 467 B1**
(45) Veröffentlichungstag und Bekanntmachung des Hinweises auf die Patenterteilung: **20.03.2002**
(21) Anmeldenummer: 99111703.7
(22) Anmeldetag: 17.06.1999
(51) Int. Cl.: B21C 37/08, C21D 9/08

(54) **Verfahren und Halbzeug zur Herstellung von Hohlwellen**
Method and intermediate product for producing hollow shafts
Méthode et produit intermédiare pour produire des arbres creux

(30) Priorität: 29.07.1998 DE 19834133
(43) Veröffentlichungstag der Anmeldung: 02.02.2000
(73) Patentinhaber: DaimlerChrysler AG, 70567 Stuttgart (DE)
(72) Erfinder: Hansich, Gustav, 73269 Hochdorf (DE); Keck, Volker, 70327 Stuttgart (DE)

(56) Entgegenhaltungen:
- BARGEL, SCHULZE ET AL: "Werkstoffkunde" 1988 , VDI-VERLAG GMBH , DÜSSELDORF XP002121638 * Seite 179-181 *

## Beschreibung

Die Erfindung betrifft ein Verfahren zur Herstellung von Hohlwellen nach der im Oberbegriff von Anspruch 1 näher definierten Art, sowie ein Halbzeug zur Herstellung von Hohlwellen gemäß Oberbegriff von Anspruch 6.

Als Ausgangsmaterial zur Fertigung von Hohlwellen, insbesondere statisch und dynamisch hochbelasteten Hohlwellen, werden gattungsgemäß Stahlrohre, überwiegend Präzisionsstahlrohre, genutzt. Neben den besonders gut geeigneten geschweißten Stahlrohren werden auch nahtlos gefertigte Stahlrohre als Ausgangsmaterial eingesetzt.

Bei der Fertigung von nahtlosen Stahlrohren geht man im Allgemeinen von einem Rohling aus, welcher annähernd wellenförmig ist und durch zerspanende oder spanlose Bearbeitung einen inneren Hohlraum erhält. Anschließend wird der dickwandige Hohlkörper über einem Dorn ausgezogen oder ausgewalzt. Die Bearbeitungsriefen oder Ungenauigkeiten bezüglich der Konzentrizität, welche beim Aushöhlen des wellenförmigen Rohlings häufig auftreten, können auch durch diese spanlose Nachbearbeitung nicht vollkommen eliminiert werden.

Bei der Fertigung von geschweißten Stahlrohren wird dagegen ein auf die gewünschte Dicke ausgewalztes Stahlblech, welches ein sehr gleichmäßiges und dichtes Gefüge und eine gute Oberflächenqualität bei sehr konstanter Blechdicke aufweist, zu einem Rohr gebogen und verschweißt. Nach dem Abtragen des überstehenden Teils der Schweißnaht wird das Rohr mehrfach über einem Dorn ausgewalzt oder ausgezogen. Nach einer nachfolgenden Wärmebehandlung entsteht auch im Bereich der Schweißnaht ein sehr gleichmäßiges Gefüge.

Dadurch weisen die geschweißten Stahlrohre im Vergleich zu den nahtlosen Stahlrohren eine deutlich bessere Oberfläche auf, sind in ihren mechanischen Eigenschaften günstiger und in ihrer geometrischen Maßhaltigkeit weitaus genauer. Allerdings können geschweißte Stahlrohre verfahrensbedingt nicht mit einem Kohlenstoffgehalt > 0,35 % hergestellt werden, da sich ein solcher Stahl nicht oder nur unter starken Qualitätseinbußen schweißen läßt.

Soll nun eine Hohlwelle mit starken Drehmomenten beaufschlagt werden, so ist auf jeden Fall eine Wärmebehandlung, insbesondere ein Härten, der Hohlwelle erforderlich. Für das Härten der Hohlwelle ist ein Kohlenstoffgehalt von mindestens 0,4 % Kohlenstoff, vorzugsweise 0,5 bis 0,8 % Kohlenstoff erforderlich, den ein geschweißtes Stahlrohr verfahrensbedingt nicht aufweisen kann.

Um nun ein Härten solcher Stahlrohre dennoch möglich zu machen, hat sich in der Praxis das nachfolgend beschriebene Verfahren allgemein durchgesetzt.

Als Ausgangsmaterial dienen Stahlrohre mit einem maximalen Kohlenstoffgehalt von 0,35 %. Sie werden durch zerspanendes Bearbeiten und/oder spanloses Umformen zu Werkstückrohlingen verarbeitet. Nachfolgend werden diese Werkstückrohlinge in eine Härterei gebracht, wo sie bei hoher Temperatur in kohlenstoffhaltiger Atmosphäre auf einen Kohlenstoffgehalt von mindestens 0,5 % aufgekohlt werden.

Aufkohlen bedeutet, daß die Werkstückrohlinge bei erhöhter Prozeßtemperatur eine gewisse Haltezeit in einer kohlenstoffhaltigen Atmosphäre verbleiben, so daß der Kohlenstoff wenigstens in die Oberfläche des Stahlrohres eindringen kann. Der so behandelte Stahl oder zumindest dessen Oberfläche kann nun gehärtet werden und wird dazu direkt aus der Prozeßtemperatur heraus abgeschreckt.

Dieses allgemein als Einsatzhärten bekannte Verfahren ermöglicht nicht nur das Härten von Stählen mit einem Kohlenstoffgehalt < 0,4 % sondern hat durch das ausschließliche Härten der Oberflächenschicht auch noch weitere, bekannte Vorteile.

Zur Fertigbearbeitung der Werkstückrohlinge müssen diese zurück zur Fertigungslinie transportiert werden, um sie dort weiterbearbeiten zu können. Dabei sind für die Bearbeitung der gehärteten Rohlinge Fertigungsverfahren wie Schleifen oder Läppen denkbar. Nach diesem Schritt der Fertigungsbearbeitung erhält man die gewünschten montagefertigen Werkstücke.

Das beschriebene Verfahren verursacht einen hohen logistischen Aufwand, da das Aufkohlen und Härten der Werkstückrohlinge verfahrensbedingt in einer gesonderten Härterei durchgeführt werden muß. Neben diesem Nachteil weist das Verfahren noch zwei weitere, gravierende, durch den Prozeß an sich verursachte Nachteile auf. Durch das Abschrecken der Rohlinge direkt aus der Prozeßwärme kommt es zu starken Härteverzügen, da der komplette Rohling von Prozeßtemperatur schlagartig auf eine niedrige Temperatur, z.B. die Umgebungstemperatur, abgekühlt und damit gehärtet wird.

Der vorliegenden Erfindung liegt daher die Aufgabe zugrunde, ein Verfahren der eingangs erwähnten Art zu schaffen, bei welchem Stahlrohre mit minimalem logistischen Aufwand zu wenigstens teilweise gehärteten Hohlwellen verarbeitet werden können.

Erfindungsgemäß wird diese Aufgabe durch die im Anspruch 1 genannten Merkmale gelöst.

Ein für die erfindungsgemäße Lösung der Aufgabe geeignetes Stahlrohr ist im kennzeichnenden Teil des selbstständigen Sachanspruchs 6 beschrieben.

Beim erfindungsgemäßen Verfahren erfolgt das Aufkohlen des Ausgangsmaterials nämlich der Stahlrohre in direktem Anschluß an deren Herstellung. In logistisch besonders vorteilhafter Art und Weise kann der Hersteller des Stahlrohrs dabei das meistens ohnehin erforderliche Normalisierungsglühen mit leicht modifizierten Behandlungsparametern und aufkohlender Ofenatmosphäre nutzen.

Die mechanische Bearbeitung des aufgekohlten, jedoch noch weichen Ausgangsmaterials, durch spanende oder spanlose Formgebung zu dem Werkstückrohling der Welle erfolgt in einer Fertigungslinie. Das anschließende Härten des Werkstückrohlings kann, insbesondere wenn es sich um ein induktives Härten handelt, dabei in diese Fertigungslinie integriert sein, denn das Induktionshärten läßt sich nach Art der Maschinen und der erforderlichen Infrastruktur ohne weiteres in eine Fertigungslinie der zerspanenden oder spanlosen Bearbeitung integrieren.

Falls die geforderte Oberflächenqualität des gehärteten Werkstückes eine Nachbearbeitung desselben notwendig macht, kann diese ebenfalls leicht in die Fertigungslinie integriert werden.

Beim besonders vorteilhaften induktiven Härten können auch nur lokale Stellen des Werkstückes erwärmt und gehärtet. Dadurch erhält man die Möglichkeit, Werkstücke nur lokal an den Stellen zu härten, an denen dies auch wirklich erwünscht ist, z.B. an Lagerflächen, Zahnflanken oder Flanken von Nocken. Außerdem treten durch die nur partiell eingebrachte Wärme, im Vergleich zum normalen Härten, härtebedingte Verzüge nur in sehr viel geringerem Maße auf. Deshalb ist eine Nachbearbeitung meist nur noch dann notwendig, wenn Zunder entfernt werden soll oder wenn hohe Oberflächenqualitäten bzw. Rundlaufeigenschaften gewünscht werden, wie z.B. für Dichtflächen. Die Nachbearbeitung der Teile nach dem Härten kann sich also sowohl auf einen Teil der produzierten Werkstücke als auch auf lokale Bereiche der einzelnen, nachzuarbeitenden Werkstücke beschränken.

Das Verfahren hat dabei nicht nur bei geschweißten Stahlrohren Vorteile. Es ermöglicht es auch Hohlwellen aus nahtlosen Stahlrohren, die natürlich durchaus mit einem Kohlenstoffgehalt von z.B. 0,5 % herstellbar sind, ohne großen logistischen Aufwand durch Einsatzhärten qualitativ zu verbessern. Dazu müssen lediglich die nahtlosen Rohre mit einem Kohlenstoffgehalt < 0,35 % gefertigt und nach erfindungsgemäßen Verfahren bearbeitet werden.

Nachfolgend ist anhand der Zeichnung das erfindungsgemäße Herstellungsverfahren prinzipiell beschrieben.

Es zeigt:
- Fig. 1: eine schematische Darstellung des eingangs beschriebenen Fertigungsverfahrens für Hohlwellen gemäß dem Stand der Technik; und
- Fig. 2: eine schematische Darstellung des erfindungsgemäßen Fertigungsverfahrens für Hohlwellen.

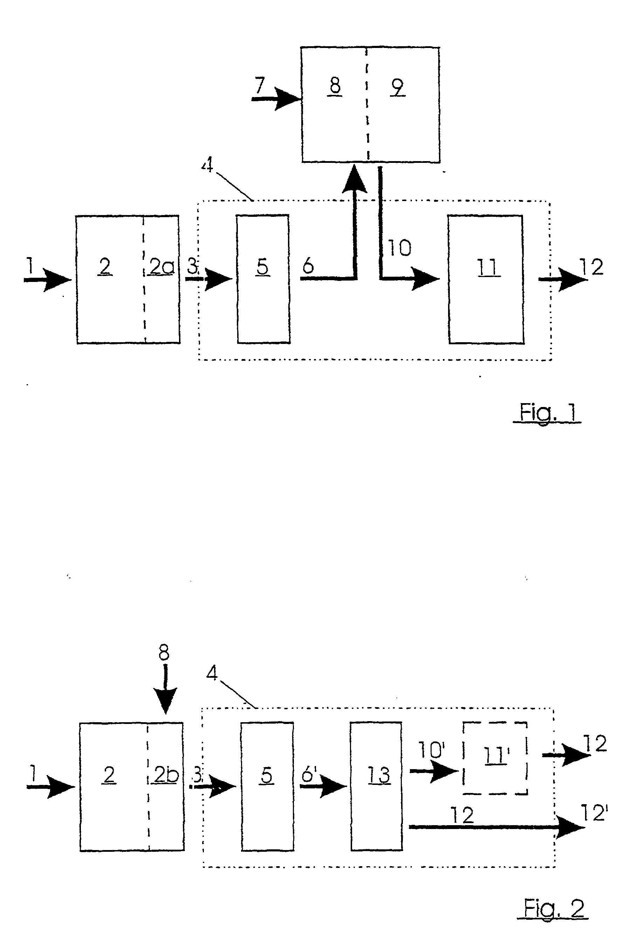

Bei dem Herstellungsverfahren für hochbelastete Hohlwellen gemäß dem Stand der Technik, wie er in Fig. 1 dargestellt ist, erfolgt die Eingabe des Rohmaterials 1 (Stahlblech) beim Rohrhersteller. Dort wird das Rohr geschweißt und auf das gewünschte Maß ausgezogen oder ausgewalzt. An diese Rohrherstellung 2 schließt sich im Allgemeinen eine Wärmebehandlung 2a in der Art eines Normalisierungsglühens an. Dadurch erhält das gezogene oder gewalzte Rohr wieder eine homogene Gefügestruktur. Dann erfolgt der Transport 3 der Rohre zum eigentlichen Hersteller der Hohlwellen. Dort gelangen die Rohre in eine entsprechende Fertigungslinie 4 zur Herstellung von Hohlwellen.

In einer Anzahl von Fertigungsschritten 5 werden aus den Stahlrohren die Hohlwellenrohlinge hergestellt. Dabei können sämtliche bekannte Verfahren der spanlosen und/oder der spanenden Formgebung zum Einsatz kommen.

Im weiteren Verlauf des Verfahrens erfolgt der Transport 6 der Hohlwellenrohlinge zu einer Härterei, wobei diese die eigentliche Fertigungslinie 4 verfahrensbedingt verlassen müssen. In der Härterei werden die Hohlwellenrohlinge auf eine erhöhte Prozeßtemperatur gebracht, und unter Zufuhr von Kohlenstoff 7 kommt es zu einem Aufkohlen 8 der Hohlwellenrohlinge. Zum Härten 9 werden die Hohlwellenrohlinge dann direkt aus der hohen Prozeßtemperatur des Aufkohlens 8 heraus abgeschreckt. Die Hohlwellenrohlinge werden dadurch an ihrer kompletten Oberfläche gehärtet und weisen praktisch immer Härteverzüge auf, welche durch den starken Temperatursturz im gesamten Hohlwellenrohling verursacht werden. Da das Aufkohlen 8 der Hohlwellenrohlinge bei hoher Prozeßtemperatur in kohlenstoffhaltiger Atmosphäre eine längere Haltezeit erforderlich macht, lassen sich die Ursachen für das Auftreten der Härteverzüge in diesem Verfahren nicht vermeiden.

Im weiteren Verlauf erfolgt ein Transport 10 zurück in die Fertigungslinie 4, zu einer wegen der Härteverzüge der Hohlwellenrohlinge auf jeden Fall erforderlichen Fertigbearbeitung 11. Erst danach können die montagefertigen Hohlwellen die Fertigungslinie 4 verlassen 12.

Das neue Herstellungsverfahren für hoch belastete Hohlwellen gemäß der Erfindung, wie es in Fig. 2 dargestellt ist, unterscheidet sich von dem bisherigen in einigen wesentlichen Punkten.

Auch bei diesem Verfahren erfolgt die Eingabe des Rohmaterials 1 (Stahlblech) beim Rohrhersteller. Dort wird das Rohr geschweißt und auf das gewünschte Maß ausgezogen oder ausgewalzt. An diese Rohrherstellung 2 schließt sich aber nun eine leicht modifizierte Wärmebehandlung 2b an. Dabei wird neben der Homogenisierung des Metallgefüges durch das Normalisierungsglühen, mittels der Zufuhr von Kohlenstoff 8 gleichzeitig ein Aufkohlen der Rohre erreicht. Die Parameter der Wärmebehandlung 2b müssen gegenüber der bisher üblichen Wärmebehandlung 2a dazu nur leicht modifiziert werden. Dadurch wird nur ein unerheblicher logistischer Mehraufwand (wegen der Kohlenstoffzufuhr 8) beim Hersteller der Stahlrohre verursacht. Den Abschluß der Wärmebehandlung 2b bildet ein langsames Abkühlen der Rohre, wodurch diese ihre Härte nicht steigern, sondern weich bleiben.

Die aufgekohlten aber noch weichen Rohre werden dann zu dem eigentlichen Hersteller der Hohlwellen transportiert 3 und die Rohre kommen dort in eine entsprechende Fertigungslinie 4.

Auch hier werden, wie beim Stand der Technik, in einer Anzahl von Fertigungsschritten 5 aus den Rohren die Hohlwellenrohlinge hergestellt.

Im weiteren Verlauf des Verfahrens erfolgt der Transport 6' der Hohlwellenrohlinge jedoch nur innerhalb der Fertigungslinie 4 zu einem induktiven Härten 13. Dort werden die Hohlwellenrohlinge an lokal begrenzten Bereichen, wie z.B. hochbelasteten Lagerflächen oder Flanken von Nocken, gehärtet. Dieses gezielte lokale Härten 13 bringt bei weitem nicht die Wärmemenge in die Hohlwellenrohlinge ein, wie dies beim Stand der Technik der Fall ist. Dadurch kommt es bei diesem Verfahren zu weit weniger starken Härteverzügen, weshalb es möglich ist, daß wenigstens ein Teil der hergestellten Hohlwellen bereits nach dem induktiven Härten 13 die Fertigungslinie 4 als montagefertige Hohlwellen verlassen können 12'.

Für den verbleibenden Teil der Hohlwellen, bei dem im Allgemeinen hohe Oberflächenqualitäten oder sehr genaue Toleranzen gefordert werden ist auch hier eine Fertigbearbeitung erforderlich. Diese erfolgt analog dem als Stand der Technik beschrieben Verfahren durch einen Weitertransport 10' der Hohlwellen zu der Fertigbearbeitung 11', wobei dieser Transport 10' jedoch nur innerhalb der Fertigungslinie 4 erfolgt. Danach verlassen auch diese Teile als montagefertige Hohlwellen die Fertigungslinie 4 bei Pfeil 12.

## Patentansprüche

1. Verfahren zur Herstellung von Hohlwellen aus geschweißten oder nahtlos gefertigten Stahlrohren als Ausgangsmaterial, wobei das Ausgangsmaterial einen maximalen Kohlenstoffgehalt von 0,35 % aufweist,
**gekennzeichnet durch**
folgende Verfahrensschritte:
1.1 in einem ersten Schritt wird das Ausgangsmaterial auf einen Kohlenstoffgehalt > 0,5 % aufgekohlt.
1.2 in einem zweiten Schritt erfolgt, ausgehend von der Prozeßtemperatur des Aufkohlens, ein langsames Abkühlen des Ausgangsmaterial, in der Art, daß das Ausgangsmaterial keine Steigerung seiner Härte erfährt.
1.3 in einem dritten Schritt wird das aufgekohlte Ausgangsmaterial **durch** zerspanendes Bearbeiten und/oder spanloses Umformen zu einem Werkstückrohling weiterverarbeitet.
1.4 in einem vierten Schritt wird der Werkstückrohling **durch** lokales Erwärmen und plötzliches Abschrecken an den gewünschten Stellen gehärtet.

2. Verfahren zur Herstellung von Hohlwellen nach Anspruch 1,
**dadurch gekennzeichnet, daß** wenigstens lokale Bereiche der Werkstückrohlinge nach dem Härten mit einem geeigneten Bearbeitungsverfahren fertigbearbeitet werden.

3. Verfahren nach Anspruch 1 oder 2,
**dadurch gekennzeichnet, daß** das Härten des Werkstückrohlings durch induktives oder konduktives Härten erfolgt.

4. Verfahren nach Anspruch 1, 2 oder 3,
**dadurch gekennzeichnet, daß** der Verfahrensschritt 1 beim Herstellen der Stahlrohre gemeinsam mit einem Normalisierungs- oder Rekristallisationsglühen erfolgt.

5. Verfahren nach einem der Ansprüche 1 bis 4,
**dadurch gekennzeichnet, daß** die erforderlichen Bearbeitungsschritte und das Härten des Werkstückrohlings in einer Fertigungslinie erfolgt.

6. Geschweißtes oder nahtloses aufgehohlten Stahlrohr als Halbzeug für die Herstellung von Hohlwellen, wobei der Werkstoff des Halbzeuges einen Kohlenstoffgehalt von mindestens 0,4 %, vorzugsweise 0,5 % bis 0,8 % aufweist.
**dadurch gekennzeichnet, dass**
• das Halbzeug einen für Bearbeitungszwecke weichen Zustand aufweist
• und ausschießlich lokal gehärtet ist.

## Claims

1. Process for producing hollow shafts from manufactured, welded or seamless steel tubes as the starting material, whereby the starting material has a maximum carbon content of 0.35%,
**characterized by** the following process stages:
- 1.1 in a first stage, the starting material is carbonized to a carbon content > 0.5%;
- 1.2 in a second stage, starting at the temperature of the process of carburization, there is slow cooling of the starting material such that the hardness of the starting material does not increase;
- 1.3 in a third stage, the carburized starting material is further processed, through machining and/or non-cutting shaping, into a blank;
- 1.4 in a fourth stage, the blank is hardened in the required places by localized heating and sudden quenching.

2. Process for producing hollow shafts, in accordance with claim 1,
**characterized in that**,
after the hardening, at least local areas of the blank are finished by an appropriate processing procedure.

3. Process in accordance with claim 1 or claim 2,
**characterized in that**
the hardening of the blank occurs through inductance or conductive hardening.

4. Process in accordance with claim 1, 2 or 3,
**characterized in that**
the first process stage in manufacturing the steel tubes occurs in common with normalizing or recrystallization annealing.

5. Process in accordance with one of claims 1 to 4,
**characterized in that**
the necessary processing stages and the hardening of the blank occur on a production line.

6. Welded or seamless carburized steel tube as a semi-finished product for the manufacture of hollow shafts, whereby the material of the semi-finished product has a carbon content of at least 0.4%, preferably 0.5 to 0.8%,
**characterized in that**
- the semi-finished product is in a pliant state for processing purposes,
- and is only locally hardened.

## Revendications

1. Procédé pour fabriquer des arbres creux à partir de tubes en acier soudés ou fabriqués sans joint, en tant que matériau de départ, le matériau de départ possédant une teneur maximale en carbone de 0,35 %, **caractérisé par** les étapes opératoires suivantes:
1.1 lors d'une première étape, on réalise la carburation du matériau de départ pour obtenir une teneur en carbone > 0,5 %,
1.2 lors d'une deuxième étape, à partir de la température du processus de carburation, on exécute un refroidissement lent du matériau de départ de telle sorte que la dureté du matériau de départ n'augmente pas,
1.3 lors d'une troisième étape, on poursuit le traitement du matériau de départ carburé au moyen d'un usinage avec enlèvement de copeaux et/ou une déformation sans formation de copeaux pour obtenir une ébauche de pièce,
1.4 lors d'une quatrième étape, on durcit l'ébauche de pièce au moyen d'un échauffement local et d'une brusque trempe aux emplacements désirés.

2. Procédé pour fabriquer des arbres creux selon la revendication 1, **caractérisé en ce qu'**on exécute un usinage de finition au moins de zones locales des ébauches de pièces après durcissement, au moyen d'un procédé approprié d'usinage.

3. Procédé selon la revendication 1 ou 2, **caractérisé en ce que** le durcissement de l'ébauche de pièce s'effectue au moyen d'un durcissement par induction ou par conduction.

4. Procédé selon la revendication 1, 2 ou 3, **caractérisé en ce que** l'étape 1 du procédé s'effectue lors de la fabrication des tubes d'acier conjointement avec un recuit de normalisation ou de recristallisation.

5. Procédé selon l'une des revendications 1 à 4, **caractérisé en ce que** les étapes requises d'usinage et le durcissement de l'ébauche de pièce s'effectuent dans une chaîne de fabrication.

6. Tube d'acier soudé ou sans joint, carburé, en tant que produit semi-fini pour la fabrication d'arbres creux, le matériau du produit semi-fini possédant une teneur en carbone égale au moins à 0,4 % et comprise de préférence entre 0,5 % et 0,8 %, **caractérisé en ce que**
- le produit semi-fini possède un état tendre à des fins d'usinage, et
- est durci uniquement localement.
